Europäisches Patentamt

European Patent Office

Office européen des brevets

(19)

(11) Veröffentlichungsnummer: **0 066 703**
**B1**

(12) # EUROPÄISCHE PATENTSCHRIFT

(45) Veröffentlichungstag der Patentschrift:
**16.10.85**

(51) Int. Cl.⁴: **C 04 B 41/83, C 04 B 41/84**

(21) Anmeldenummer: **82103493.1**

(22) Anmeldetag: **24.04.82**

(54) Verfahren zum Verbessern der Oberflächenbeschaffenheit keramischer Gegenstände.

(30) Priorität: **04.06.81 DE 3122138**

(43) Veröffentlichungstag der Anmeldung:
**15.12.82 Patentblatt 82/50**

(45) Bekanntmachung des Hinweises auf die Patenterteilung:
**16.10.85 Patentblatt 85/42**

(84) Benannte Vertragsstaaten:
**AT BE CH DE FR GB IT LI LU NL SE**

(56) Entgegenhaltungen:
**DE - A - 2 551 837**
**DE - A - 2 637 728**
**DE - B - 2 204 982**
**FR - A - 2 439 046**
**GB - A - 1 198 462**
**NL - A - 266 660**

(73) Patentinhaber: **DECO-Glas Peter Böttger KG,
Nordstrasse, D-5418 Selters/Ww. (DE)**

(72) Erfinder: **Böttger, Peter, Deutscher Nordstrasse 14,
D-5418 Selters/Ww. (DE)**

(74) Vertreter: **König, Reimar, Dr.-Ing. et al, Patentanwälte
Dr.-Ing. Reimar König Dipl.-Ing. Klaus Bergen
Wilhelm-Tell-Strasse 14 Postfach 260162,
D-4000 Düsseldorf 1 (DE)**

## Beschreibung

Die Erfindung bezieht sich auf ein Verfahren zum Verbessern der Oberflächenbeschaffenheit und des Bruchverhaltens keramischer Gegenstände, bei dem ein Rohling zunächst mit einer Grundierung versehen, anschliessend vorgewärmt und elektrostatisch mit einem Kunststoffpulver beschichtet wird, das bei erhöhter Temperatur einen Lackfilm bildet.

Keramische Produkte, wie beispielsweise Blumentöpfe, -schalen' und -vasen, Krüge, kunstgewerbliche Artikel, Geschirr, Heizkörperverkleidungen und Baumaterialien wie Dachziegel, Wand- und Bodenplatten sowie Rohre, gelangen nach dem Brennen häufig ohne jede weitere Oberflächenbehandlung zur Verwendung; sie weisen demgemäss infolge ihrer Porosität eine rauhe Oberfläche auf und sind je nach dem Porenvolumen mehr oder minder flüssigkeits- und gasdurchlässig. Das führt beispielsweise bei Blumentöpfen zu einer verhältnismässig starken Verdunstung sowie mit der Zeit zu Ausblühungen, die den Topf alsbald unansehnlich machen.

Es ist bekannt, keramische Gegenstände mit einer Glasur zu versehen. Dies geschieht bei einem Vor-Brennen bei etwa 900 bis 950 °C und Abkühlen durch Tauchen in eine wässrige Aufschlemmung eines keramischen Gemischs und anschliessendes Brennen bei zumeist 1200 bis 1500 °C. Auf diese Weise entsteht ein gegebenenfalls farbiger harter Überzug, der dem betreffenden Gegenstand nicht nur ein gefälliges Aussehen verleiht, sondern ihn auch undurchlässig für Gase und Flüssigkeiten macht. Das Brennen ist jedoch wegen seiner Dauer von ein bis drei Tagen und der sehr hohen Brenntemperatur sehr kostenintensiv.

Ein weiterer Nachteil herkömmlicher Ton- bzw. Keramikgegenstände mit oder ohne Glasur besteht in deren verhältnismässig geringer Bruchfestigkeit und der Neigung zu scharfkantigen Bruchflächen.

Des weiteren resultiert aus der rauhen Oberfläche nicht glasierter keramischer Gegenstände eine hohe Verschmutzungsgefahr und ein erheblicher Pflegeaufwand, dem jedoch insofern Grenzen gesetzt sind, als sich Reinigungsmittel leicht in den Poren festsetzen oder auch in das Behälterinnere eindringen und dort zu Schäden führen können.

Schliesslich ist auch die Splittergefahr nicht unerheblich, da die üblichen Ton- bzw. Keramikprodukte ausserordentlich spröde sind.

Eine Verminderung der Splittergefahr, der Porosität sowie eine Verbesserung der Bruchfestigkeit ist zwar schon aus der deutschen Offenlegungsschrift 2 551 837 bekannt; bei dem betreffenden Verfahren wird ein mit Graphitzusatz versehener Grundlack elektrostatisch direkt auf einen keramischen Rohling aufgesprüht. Dieser Graphitzusatz ist notwendig, um den Decklack anschliessend ebenfalls elektrostatisch als Pulver aufbringen zu können.

Der Graphitzusatz verschlechtert indessen die Haftung des Grundlacks auf dem Rohling sowie die Haftung des Decklacks auf der Grundlackschicht.

Der Erfindung liegt daher die Aufgabe zugrunde, das Verfahren der eingangs erwähnten Art so zu verbessern, dass sich eine einwandfreie Haftung auf dem Rohling ergibt.

Gelöst wird diese Aufgabe dadurch, dass der Rohling mit einer Silanlauge gereinigt, dann auf etwa 160 °C vorgewärmt und dabei das verbleibende Silan getrocknet, anschliessend auf das Silan als Haftvermittler das Kunststoffpulver aufgebracht auf etwa 190 °C aufgeheizt und nach dem Abkühlen durch Tauchen oder Besprühen mit einem lasierenden organischen Nasslack überzogen wird.

Bei dem Verfahren gemäss der Erfindung hat sich überraschenderweise herausgestellt, dass ein mit Silan als Haftvermittler beschichteter Rohling ausreichend leitend ist, um elektrostatisch mit Kunststoffpulver beschichtet zu werden. Dieses Kunststoffpulver ist graphitfrei, um unter allen Umständen ein einwandfreies Haften des Pulvers bzw. Grundlacks auf dem Rohling zu erreichen. Auch der anschliessend aufgebrachte Nasslack haftet auf dem graphitfreien Grundlack besonders gut, so dass nach dem erfindungsgemässen Verfahren hergestellte Keramikgegenstände eine ausserordentlich hohe Haftfestigkeit der Beschichtung aufweisen.

Zum Beschichten lassen sich verschiedene Kunststoffpulver, beispielsweise Epoxyd-, Polyester-, Polyurethan-, Acrylat-, oder Weich-PVC-Pulver verwenden.

Um der Beschichtung besondere Eigenschaften zu verleihen, beispielsweise eine bestimmte Farbwirkung zu erzielen, kann der Rohling auch mit einem Pulvergemisch oder mit mehreren Pulvern gleichzeitig oder auch nacheinander beschichtet werden.

Kommt ein Zwei-Komponenten-Kunststoff, beispielsweise ein Epoxyd-Kunstharz oder Polyester zur Verwendung, dann wird der beschichtete Rohling zunächst noch in einem Ofen beispielsweise etwa fünf bis zehn Minuten bei 180 bis 200 °C ausgehärtet und anschliessend auf Raumtemperatur abgekühlt.

Die erfindungsgemässe Kunststoffbeschichtung erhöht die Bruchsicherheit wesentlich und verhindert infolge ihrer hohen Dichte das Entstehen von Ausblühungen. Ausserdem ergibt sich eine äusserst glatte und daher pflegeleichte Oberfläche, die nicht nur hygienisch einwandfrei, sondern auch ausserordentlich hautsympatisch ist, so dass sich derart beschichtete Behälter auch als Trinkgefässe eignen. Hinzu kommen die wegen der Porenversiegelung durch die Beschichtung äusserst geringen Verdunstungsverluste, die bei Blumentöpfen ein sparsameres Giessen erlauben. Ausserdem können gegen Feuchtigkeitsschäden ansonsten erforderliche Untersetzer bei unten geschlossenen Gefässen entfallen.

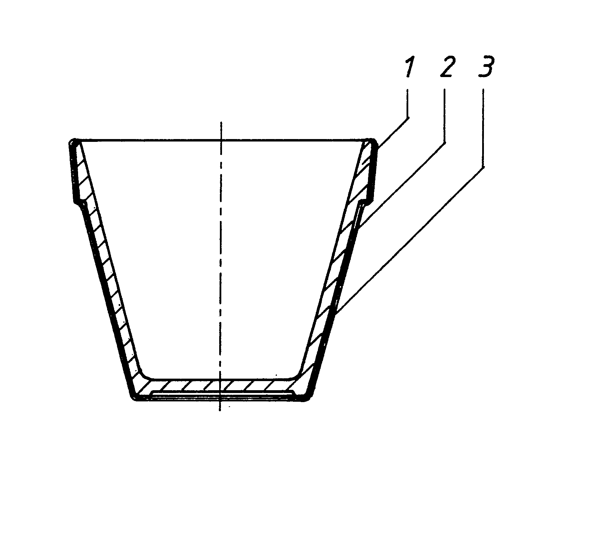

Die Erfindung wird nachfolgend anhand eines in der Zeichnung dargestellten Ausführungsbeispiels des näheren erläutert.

Ein herkömmlicher Blumentopf 1 aus in üblicher Weise gebranntem Ton diente als Rohling und wurde in Rotation versetzt zunächst mit einer dreiprozentigen Silanlauge besprüht, um die Oberfläche zu reinigen und gleichzeitig mit dem Silan als Primer zu versehen. Danach wurde der Rohling bei 160 °C vorgewärmt und getrocknet. Das nach dem Trocknen verbliebene Silan diente als Haftvermittler für die anschliessend elektrostatisch aufzubringende Beschichtung.

Der vorgewärmte Rohling wurde alsdann erneut in Drehung versetzt und unter Verwendung einer üblichen Spritzpistole zehn Sekunden mit einem auf 30 bis 40 KV elektrostatisch aufgeladenen Pulver einer Teilchengrösse unter 100 µm besprüht, um eine 60 bis 70 µm dicke Schicht aufzubringen. Dabei wurde der Rohling der gewünschten Beschichtungsbegrenzung entsprechend teilweise mit einer Schablone abgedeckt.

Nach dem Beschichten durchlief der Rohling einen Tunnelofen, um bei einer Temperatur von etwa 190 °C auszuhärten. Danach wurde der beschichtete Blumentopf 1, 2 langsam auf Raumtemperatur abgekühlt und durch Tauchen in einen lasierenden organischen Nasslack mit einer Lackschicht 3 versehen. Bei einem Langzeitversuch wurden mehrere Blumentöpfe mit einer erfindungsgemässen Epoxyd/Polyester-Beschichtung untersucht. Dabei ergab sich eine ausserordentlich hohe Witterungsbeständigkeit. Des weiteren erwies sich die Beschichtung als unempfindlich gegenüber Blumenerde, Pflanzen und Giesswasser. Nach dem Langzeitversuch wurde die Haftfestigkeit mit Hilfe eines 72-stündigen Schwitzwasserversuchs bei 45 °C und 100 %iger Luftfeuchtigkeit sowie des Gitterschnittversuchs mit einem Schnittlinienabstand von 2,5 mm untersucht. Beide Versuche ergaben eine ausserordentlich hohe Haftfestigkeit insbesondere auch im Bereich der Ecken eines Kreuzschnitts.

Gleichzeitig ergab sich im Vergleich zu unbeschichteten Blumentöpfen gleicher Art ein wesentlich geringerer Giesswasserverbrauch bei von Ausblühungen völlig freier Oberfläche ohne jede Beeinträchtigung des Pflanzenwachstums.

## Patentansprüche

1. Verfahren zum Verbessern der Oberflächenbeschaffenheit und des Bruchverhaltens keramischer Gegenstände, bei dem ein Rohling zunächst mit einer Grundierung versehen, anschliessend vorgewärmt und elektrostatisch mit einem Kunststoffpulver beschichtet wird, das bei erhöhter Temperatur einen Lackfilm bildet, dadurch gekennzeichnet, dass der Rohling mit einer Silanlauge gereinigt, dann auf etwa 160 °C vorgewärmt und dabei das verbleibende Silan getrocknet, anschliessend auf das Silan als Haftvermittler das Kunststoffpulver aufgebracht, auf etwa 190 °C aufgeheizt und nach dem Abkühlen durch Tauchen oder Besprühen mit einem lasierenden organischen Nasslack überzogen wird.

2. Verfahren nach Anspruch 1, dadurch gekennzeichnet, dass der Rohling mit einem Pulvergemisch oder mit mehreren Pulvern gleichzeitig oder nacheinander beschichtet wird.

3. Verfahren nach Anspruch 1 oder 2, dadurch gekennzeichnet, dass der Rohling mit einem Zwei-Komponenten-Kunststoff beschichtet und anschliessend ausgehärtet wird.

## Claims

1. Process for improving the surface finish and the fracture behaviour of ceramic articles, wherein an unfinished article is first furnished with a primer, then preheated and electrostatically coated with a plastics powder which forms a lacquer film at raised temperature, characterized in that the unfinished article is cleaned with a silane wash, then preheated to approximately 160 °C with drying of the remaining silane, then the plastics powder is applied onto the silane as bond-promoting agent, is heated to approximately 190 °C and, after cooling, is coated with a transparent organic wet lacquer by dipping or spraying.

2. Process according to Claim 1, characterized in that the unfinished product is coated with a powder mixture or with a plurality of powders simultaneously or one after another.

3. Process according to Claim 1 or 2, characterized in that the unfinished procuct is coated with a two-component plastics material and then hardened.

## Revendications

1. Procédé pour améliorer l'état de surface et le comportement à la rupture d'objets en matière céramique dans lequel on recouvre d'abord une pièce brute d'une couche de fond, on la chauffe ensuite et on la recouvre, par un procédé électrostatique, d'une poudre de matière synthétique qui forme un film de laque à température élevée, caractérisé en ce qu'on nettoie la pièce brute au moyen d'une lessive de silane, en ce qu'on la préchauffe à environ 160 °C et sèche ainsi le silane restant, en ce qu'on applique ensuite la poudre de matière synthétique sur le silane servant d'adjuvant à l'adhésion, en ce qu'on chauffe à environ 190 °C et en ce qu'on recouvre ensuite ladite pièce par immersion ou par pulvérisation d'une laque humide organique formant une glaçure.

2. Procédé selon la revendication 1 caractérisé en ce qu'on recouvre la pièce brute d'un mélange de poudres ou de plusieurs poudres déposées simultanément ou successivement.

3. Procédé selon la revendication 1 ou 2 caractérisé en ce qu'on recouvre la pièce brute d'une matière synthétique à deux composants et en ce qu'on la durcit ensuite.

1 2 3